# EUROPÄISCHE PATENTSCHRIFT

(11) **EP 0 819 378 B1**
(45) Veröffentlichungstag und Bekanntmachung des Hinweises auf die Patenterteilung: **15.05.2002**
(21) Anmeldenummer: 97109760.5
(22) Anmeldetag: 16.06.1997
(51) Int. Cl.: A01K 11/00

(54) **Transponder-Aufnahmegehäuse zur Implantation bei der Aufzucht und Haltung von Tieren**
Implantable transponder housing for animal husbandry
Boîtier de transpondeur implantable pour l'élevage animal

(30) Priorität: 18.07.1996 DE 29612496 U
(43) Veröffentlichungstag der Anmeldung: 21.01.1998
(73) Patentinhaber: GSF - Forschungszentrum für Umwelt und Gesundheit GmbH, 85764 Oberschleissheim (DE)
(72) Erfinder: Menache, Georg, Dr., 80995 München (DE)
(74) Vertreter: Reinhard - Skuhra - Weise & Partner

(56) Entgegenhaltungen:
- EP-A- 0 364 045
- WO-A-91/10982
- WO-A-93/05648

## Beschreibung

Die Erfindung betrifft ein Transponder-Aufnahmegehäuse zur Implantation bei der Aufzucht und Haltung von Tieren.

Die Nutzung der Transponder-Technik bei der Aufzucht und Haltung von Tierherden für die Nahrungskette als fälschungssicheres und unverlierbares Identifikations- und Kontrollinstrument befindet sich noch in der Phase von Pilotanwendungen. Die aktuelle BSE- und Hormonthematik sowie die daraus zu erwartenden Kontrollgesetze werden jedoch in kurzer Zeit für eine weltweite Anwendung dieser Technik sorgen.

Im Rahmen der Transponder-Technik werden den Tieren in einen Körperabschnitt Transponder implantiert, in dem keinerlei Beeinträchtigungen des Wohlbefindens, des Bewegungsablaufs oder des Wachstums hervorgerufen werden können, und wo zusätzlich betriebssicher ein Auslesen mittels eines Transponder-Lesegerätes möglich ist. Die Kontrolle über Transponder bietet eine Lösung für Herden-Management, Besitzerverfolgung, Krankengeschichte und Herkunft, wobei die Technologie Ohrmarken, Tätowierung und Brandzeichen ersetzt.

Bekannt sind bisher passive Transponder, die keine eigene Energiequelle besitzen. Die passiven Transponder werden über ein niederfrequentes magnetisches Feld eines Handlesegerätes aktiviert, wobei in nachteiliger Weise eine Aktivierung nur innerhalb einer geringen Reichweite möglich ist.

Der Oberbegriff des Anspruchs 1 ist aus der EP-A-0364045 bekannt.

Weiterhin entwickelt wurden zwischenzeitlich aktive Transponder, die aus einem 5 bis 20 mm langen runden Ferritkern mit aufgewickelter Spule aus Kupferdraht und einer Platine von ca. 5 mm Kantenlänge zur Befestigung des Transponderchips sowie einer Lithiumbatterie bestehen. Derartige aktive Transponder erlauben eine Identifikation über größere Entfernungen als die passiven Transponder, erfordern jedoch sowohl zur Gewährleistung einer einwandfreien Funktion als auch aufgrund der involvierten Materialien ein Aufnahmegehäuse, das alle mechanischen Belastungen im Tierkörper vom Transponder fernhält, im Tierkörper leicht wiederauffindbar ist und nicht zu Entzündungen des umgebenden Gewebes führt.

In ersten Feldversuchen wurden bereits Gehäuse aus Glas eingesetzt, die jedoch zu keinen befriedigenden Ergebnissen führten, weil eine große Gefahr von Glasbruch, von Wanderungen im Tierkörper sowie von Entzündungen des umgebenden Gewebes besteht.

Mit der Erfindung soll ein Transponder-Aufnahmegehäuse zur Implantation bei der Aufzucht und Haltung von Tieren verfügbar gemacht werden, das vor allem den Anforderungen an Gewebeverträglichkeit und mechanischer Festigkeit Rechnung trägt.

Erfindungsgemäß wird dieses Ziel durch ein Transponder-Aufnahmegehäuse mit den Merkmalen des Anspruchs 1 erreicht.

Bevorzugte weitere Ausgestaltungen des Aufnahmegehäuses sind in den nachgeordneten Ansprüchen enthalten.

Erfindungsgemäß ist somit ein zweiteiliges Gehäuse vorgesehen, das aus einem bio-kompatiblen Kunststoff gefertigt ist und damit Entzündungen des umgebenden Gewebes oder eine Verkapselung mit dem Bindegewebe verhindert. Das erfindungsgemäße Gehäuse hält vorteilhaft allen bei den vorgesehenen Anwendungen auftretenden Belastungen stand, und die Gehäusekonfiguration verhindert vorteilhaft das "Wandern" im Tierkörper.

Die bevorzugt vorgesehene, lösbare Befestigung der Gehäuseteile mittels einer Gewindeverbindung ermöglicht eine staub- und flüssigkeitsdichte Verschraubung, die für das Gehäuse auch einen Einsatz in anderen, beispielsweise umweltbelasteten Anwendungen ermöglicht.

Wenn das Gehäuse einmal in einem Tierkörper implantiert ist, stellen vorteilhaft sowohl die Gehäusegröße als auch die Gehäuseform sicher, daß keine "Wanderung" des Gehäuses im Tierkörper stattfindet. Hierbei weist das Gehäuse an seiner Außenseite Einkerbungen bzw. Einstiche auf und ist rotationssymmetrisch, vorzugsweise zylinderförmig, ausgebildet, wodurch es sich auch außerordentlich einfach als Drehteil herstellen läßt. Zudem besteht auch die Möglichkeit, den Aufnahmeraum genügend groß zu gestalten, um auch aufwendigere Elektroniksysteme aufnehmen zu können.

Bevorzugt wird als bio-kompatibler Grundstoff ein Spezial-PTFE eingesetzt. Es können jedoch auch andere bio-kompatible Kunststoffe verwendet werden, die den Anforderungen an ausreichender mechanischer Festigkeit und hermetischer Abdichtbarkeit zweier Gehäuseabschnitte genügen.

Die vorgesehene Verschraubung ist bevorzugt selbstabdichtend und selbstsichernd ausgebildet und kann zum Lösen der Gehäuseabschnitte voneinander nur mit Krafteinsatz gelöst werden.

Vorteilhaft ist weiterhin vorgesehen, daß zur Identifizierbarkeit des Gehäuses an dessen Außenseite eine Aufnahmefläche für ein vorzugsweise lasergraviertes Indentifizierungskennzeichen gebildet ist.

Gemäß einer bevorzugten Ausgestaltung ist das Gehäuse zylinderförmig ausgebildet und besitzt eine Länge von ca. 40 mm und einen Außendurchmesser von ca. 16 mm, wobei der Aufnahmeraum für den Transponder ca. 30 mm lang ist und einen Durchmesser von etwa 8 mm aufweist.

Nachfolgend wird unter Bezugnahme auf die beigefügten Figuren ein Ausführungsbeispiel der Erfindung näher erläutert. Es zeigen:
- Fig. 1: einen bemaßten Längsschnitt durch einen ersten Gehäuseabschnitt eines Ausführungsbeispiels eines erfindungsgemäßen Transponder-Aufnahmegehäuses; und
- Fig. 2: einen Längsschnitt durch einen zweiten Gehäuseabschnitt eines Ausführungsbeispiels des erfindungsgemäßen Transponder-Aufnahmegehäuses, der mit dem ersten Gehäuseabschnitt gemäß Fig. 1 hermetisch dicht verschraubbar ist.

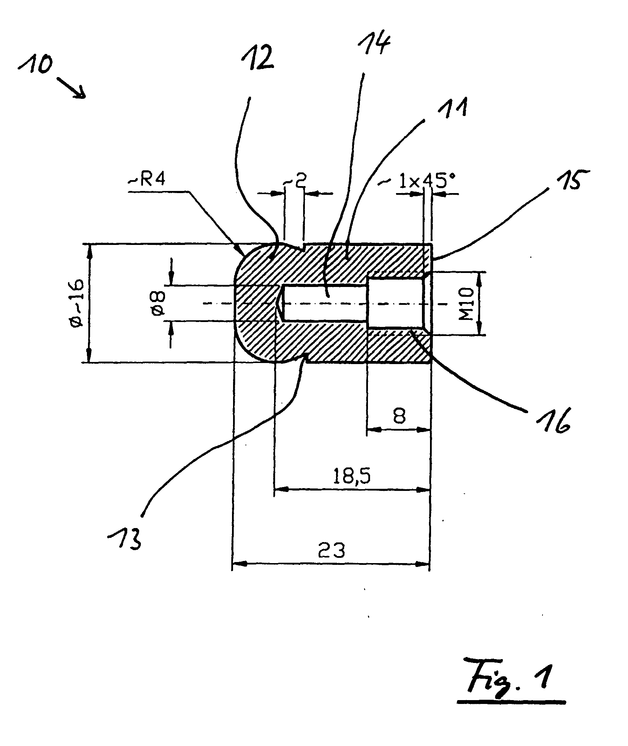

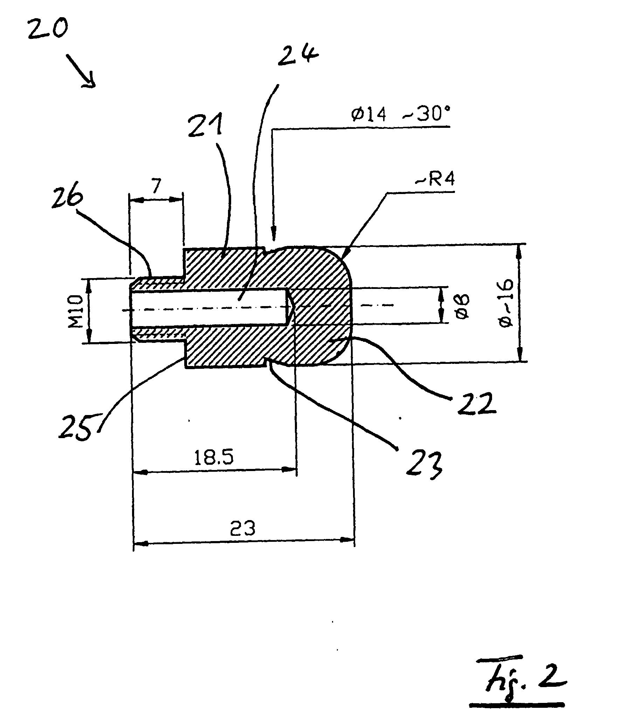

In Fig. 1 ist ein Längsschnitt eines ersten Gehäuseabschnitts 10 dargestellt, der lösbar mit einem in Fig. 2 dargestellten zweiten Gehäuseabschnitt 20 verschraubt werden kann. Die Gehäuseabschnitte 10 und 20 bestehen aus einem bio-kompatiblen Kunststoff, beispielsweise einem Spezial-PTFE. Sie sind rotationssymmetrisch ausgebildet und lassen sich in einfacher Weise als Drehteil herstellen.

Der erste Gehäuseabschnitt 10 besitzt einen zylinderförmigen Abschnitt 11 und ein abgerundetes geschlossenes Ende 12, das gegenüber dem Zylinderabschnitt 11 über eine Einkerbung 13 anschließt. Die Einkerbung 13 kann auch als rechteckiger Einstich statt als Sägezahnstufe, wie in Fig. 1 gezeigt, ausgebildet sein. Im Inneren des ersten Gehäuseabschnitts 10 ist ein rotationssymmetrischer zylinderförmiger Aufnahmeraum 14 gebildet, der sich von dem Bereich einer Anschlußfläche 15, die zum Anschluß des ersten Gehäuseabschnitts 10 an dem zweiten Gehäuseabschnitt 20 vorgesehen ist, bis in den Endabschnitt 12 nach Art einer Sackbohrung erstreckt. In dem Zylinderabschnitt 11 befindet sich weiterhin im Bereich der Anschlußfläche 15 ein Innengewinde 16, das im Vergleich zu dem Durchmesser des Aufnahmeraums 14 einen größeren Durchmesser besitzt und zu der Anschlußfläche angephast ist.

Die Bemaßungen eines bevorzugten Ausführungsbeispiels des ersten Gehäuseabschnitts 10 sind in Fig. 1 angegeben. Deutlich erkennbar ist, daß die den Aufnahmeraum 14 umgebende Wandstärke des Gehäuseabschnitts 10 ebenso wie die des Gehäuseabschnitts 20 zumindest gleich groß ist wie der Außendurchmesser des Aufnahmeraums 14.

Die Gestaltung des zweiten Gehäuseabschnitts 20 gemäß Fig. 2 entspricht, bis auf einen vorstehend von einer Anschlußfläche 25 vorstehenden Außengewindestutzen 26 anstelle des Innengewindes 16, der des ersten Gehäuseabschnitts 10. Der zweite Gehäuseabschnitt 20 besitzt somit ebenfalls einen Zylinderabschnitt 21, einen Endabschnitt 22, einen Einstich bzw. eine Einkerbung 23 sowie einen Aufnahmeraum 24.

Zum Einsatz des Transponder-Aufnahmegehäuses wird zunächst der Transponder selbst in den Aufnahmeraum 14 bzw. 24 eingesetzt und anschließend eine Verschraubung der beiden Gehäuseabschnitte 10 und 20 vorgenommen, bis die Anschlußfläche 15 sich nahe oder an der Anschlußfläche 25 des zweiten Gehäuseabschnittes befindet. Dabei ist durch eine spezielle Gestaltung des Gewindes mit sich in Einschraubrichtung ändernden Flanken sichergestellt, daß die Schraubverbindung im Wege der Selbstabdichtung hermetisch abgedichtet wird und gleichzeitig die Gewindeverbindung selbstsichernd ist.

## Patentansprüche

1. Transponder-Aufnahmegehäuse zur Implantation bei der Aufzucht und Haltung von Tieren, bestehend aus einem ersten Gehäuseabschnitt (10) und einem zweiten Gehäuseabschnitt (20) aus einem bio-kompatiblen Kunststoff, wobei die beiden Gehäuseabschnitte (10, 20) zur Bildung eines hermetisch abgedichteten Aufnahmeraums (14, 24) für einen einzusetzenden Transponder lösbar aneinander befestigbar sind,
**dadurch gekennzeichnet,**
**daß** die Gehäuseabschnitte (10, 20) über eine selbstabdichtende und selbstsichernde Gewindeverbindung (16, 26) aneinander befestigbar sind und
**daß** wenigstens einer der Gehäuseabschnitte (10, 20) an seiner Außenseite wenigstens eine Einformung (13, 23) zur Verbesserung der Lagesicherung im Tierkörper aufweist.

2. Aufnahmegehäuse nach Anspruch 3,
**dadurch gekennzeichnet,**
**daß** die Einformung (13, 23) als Einkerbung bzw. Einstich ausgebildet ist.

3. Aufnahmegehäuse nach einem der vorangehenden Ansprüche,
**dadurch gekennzeichnet,**
**daß** jeder Gehäuseabschnitt (10, 20) ein abgerundetes geschlossenes Ende (12, 22) aufweist.

4. Aufnahmegehäuse nach einem der vorangehenden Ansprüche,
**gekennzeichnet durch** eine rotationssymmetrische Ausbildung der Gehäuseabschnitte (10, 20) und der zugehörigen Aufnahmeräume (14, 24).

5. Aufnahmegehäuse nach Anspruch 4,
**gekennzeichnet durch** eine zylinderförmige Ausbildung der Gehäuseabschnitte (10, 20) und der zugehörigen Aufnahmeräume (14, 24).

6. Aufnahmegehäuse nach einem der vorangehenden Ansprüche,
**dadurch gekennzeichnet,**
**daß** die die Aufnahmeräume (14, 24) radial umgebende Wandstärke des Gehäuseabschnittes (10, 20) gleich oder größer ist als der Durchmesser des jeweiligen Aufnahmeraums (14, 24).

7. Aufnahmegehäuse nach einem der vorangehenden Ansprüche,
**dadurch gekennzeichnet,**
**daß** als bio-kompatibler Kunststoff ein Spezial-PTFE vorgesehen ist.

8. Aufnahmegehäuse nach einem der vorangehenden Ansprüche,
**dadurch gekennzeichnet,**
**daß** wenigstens an der Außenseite eines Gehäuseabschnittes (10, 20) eine Aufnahmefläche für ein vorzugsweise lasergraviertes Identifizierungskennzeichen vorgesehen ist.

## Claims

1. Transponder-holding case as implant in animal breeding and comprising:
a first case section (10) and a second case section (20) made of a biologically compatible synthetic material, with the two case sections (10, 20) being designed for being detachably fastened at one another so as to form a hermetically sealed holding space (14, 20) for a transponder to be received therein,
wherein said case sections (10, 20) are adapted to be fastened to each other through a self-sealing and self-locking threaded joint, and
wherein at least one of said case sections presents at least one recessed portion on its outside for improved retaining of said holding case at a position within an animal body.

2. The transponder-holding case according to claim 1, **characterised in that** said recessed portion (13, 23) is formed as notch or groove.

3. The transponder-holding case according to a proceeding claim, **characterised in that** each case section (10, 20) comprises a rounded closes end (12, 22).

4. The transponder-holding case according to a proceeding claim, **characterised by** an axially symmetrical configuration of said case sections (10, 20) and associated holding space (14, 24).

5. The transponder-holding case according to claim 4, **characterised by** a cylindrical configuration of said case sections (10, 20) and of the associated holding spaces (14, 24).

6. The transponder-holding case according to the proceeding claim, **characterised in that** the thickness of the walls of said case section (10, 20) which surrounds said holding spaces (14, 24) radially, is equal to or larger than the diameter of the holding space (14, 24).

7. The transponder-holding case according to a proceeding claim, **characterised in that** a special PTFE is provided as biologically compatible synthetic resin.

8. The transponder-holding case according to a proceeding claim, **characterised in that** a receiving area is provided at least on the outside of one case section (10, 20) for a preferably laser-engraved identifier mark.

## Revendications

1. Boîtier de logement de transpondeur à implanter pour l'élevage et l'entretien d'animaux, qui comprend une première partie de boîtier (10) et une deuxième partie de boîtier (20) dans une matière plastique biocompatible, dans lequel les deux parties de boîtier (10, 20) peuvent être fixées entre elles de façon détachable pour former un espace de logement hermétique (14, 24) pour un transpondeur à insérer, **caractérisé en ce que** les parties de boîtier (10, 20), peuvent être fixées entre elles au moyen d'un raccord fileté auto-étanchéifiant et indesserrable (16, 26), et **en ce qu'**au moins une des parties de boîtier (10, 20) présente sur son côté extérieur au moins un creux (13, 23) pour l'amélioration de la sécurité de positionnement dans le corps de l'animal.

2. Boîtier de logement selon la revendication 1, **caractérisé en ce que** le creux (13, 23) est réalisée comme rainure ou comme entaille.

3. Boîtier de logement selon l'une des revendications précédentes, **caractérisé en ce que** chaque partie de boîtier (10, 20) présente une extrémité fermée arrondie (12, 22).

4. Boîtier de logement selon l'une des revendications précédentes, **caractérisé par** un mode de réalisation symétrique en rotation des parties de boîtier (10, 20) et des espaces de logement correspondants (14, 24).

5. Boîtier de logement selon la revendication 4, **caractérisé par** un mode de réalisation cylindrique des parties de boîtier (10, 20) et des espaces de logement correspondants (14, 24).

6. Boîtier de logement selon l'une des revendications précédentes, **caractérisé en ce que** l'épaisseur de la paroi qui entoure les espaces de logement (14, 24) de façon radiale de chaque partie de boîtier (10, 20) est égale ou supérieure au diamètre de l'espace de logement correspondant (14, 24).

7. Boîtier de logement selon l'une des revendications précédentes, **caractérisé en ce qu'**un PTFE spécial est prévu comme matière plastique biocompatible.

8. Boîtier de logement selon l'une des revendications précédentes, **caractérisé en ce que**, au moins sur le côté extérieur d'une partie de boîtier (10, 20), une surface de logement est prévue pour une marque d'identification de préférence gravée au laser.
